# EUROPÄISCHE PATENTANMELDUNG

(11) **EP 1 361 551 A1**
(43) Veröffentlichungstag der Anmeldung: **12.11.2003**
(21) Anmeldenummer: 02010457.6
(22) Anmeldetag: 08.05.2002
(51) Int. Cl.: G07F 19/00, H04M 17/00

(54) **Datenübertragungsverfahren und -anordnung, insbesondere für privaten Zahlungsverkehr**

(71) Anmelder: Encorus Technologies GmbH, 70565 Stuttgart (DE)
(72) Erfinder: Männle, Manfred, 70563 Stuttgart (DE); Bouceka, Denis, 70439 Stuttgart (DE); Bernd, Biechele, 70597 Stuttgart. (DE); Marra, Andreas, Dr., 70197 Stuttgart (DE); Ammermann, Dirk, Dr., 70771 Leinfelden-Echterdingen (DE); Hackett, Damian, 72070 Tübingen (DE); Most, Lysann, 04178 Leipzig (DE); Schulze, Andreas, 70197 Stuttgart (DE); Köhntopp, Frank, 55606 Hochstetten-Dhaun (DE)
(74) Vertreter: Heinze, Ekkehard, Dipl.-Phys. Dr.

(57) **Zusammenfassung**

Datenübertragungsverfahren zur Übermittlung von zahlungsverkehrsrelevanten Informationen zur Ausführung einer Zahlung eines Zahlers an einen Zahlungsempfänger unter Zugriff auf ein durch einen ersten Kontenverwaltungsserver elektronisch verwaltetes Zahlerkonto unter Nutzung eines Telekommunikationsnetzes, insbesondere Mobilfunknetzes, an das der Zahler mit einem Telekommunikations-Endgerät angeschlossen ist, wobei von dem Telekommunikations-Endgerät des Zahlers eine Verbindung mit einem ersten Transaktionsserver eines Systembetreibers oder Dienstanbieters aufgebaut und ein erster Zahlungsanweisungs-Datensatz, der mindestens eine Betragsinformation und eine Adressinformation des Zahlungsempfängers umfasst, an den ersten Transaktionsserver übermittelt wird,

## Beschreibung

Die Erfindung betrifft ein Datenübertragungsverfahren zur Übermittlung von zahlungsverkehrsrelevanten Informationen, insbesondere für den privaten Zahlungsverkehr, sowie eine korrespondierende Datenübertragungsanordnung.

Die Telekommunikation - insbesondere die mobile Telekommunikation - stellt heute ein Gebiet mit rasanter technischer und wirtschaftlicher Entwicklung und eine wesentliche Quelle wirtschaftlichen Wachstums und neuer sozialer Entwicklungen dar. Für einen Großteil der Menschen in den Industrieländern wird das Mobiltelefon ("Handy") mehr und mehr zu einem universellen Kommunikations- und Informationsinstrument und auch zunehmend für den Zugriff auf Waren und Dienstleistungen genutzt. Diese Entwicklung wird noch durch unzureichende Möglichkeiten für eine sichere und zugleich einfache Bezahlung von über das Handy bestellten Informationen, Waren und Dienstleistungen behindert.

Zwar gibt es Lösungen, die dem Nutzer eines Handys - mit oder ohne Prepaid-Karte - die Autorisierung von Zahlungen ermöglichen, welche anschließend auf an sich konventionelle Weise per Lastschriftverfahren oder Kreditkarten-Abbuchung abgewickelt werden. Diese Verfahren setzen jedoch, wie auch die im Internet inzwischen eingebürgerten Zahlungsabwicklungen, die Kreditwürdigkeit des Käufers und die Verfügungsbefugnis über eine Kreditkarte oder ein Girokonto mit Dispositionskredit voraus. Zudem wohnen diesen Verfahren zeitliche Verschiebungen inne, die sich nachteilig auf die Transparenz und Zuverlässigkeit der Gesamtabwicklung auswirken. Ein großes Problem der bisher bekannten Verfahren dieser Art besteht in ihrer mangelnden "Passfähigkeit" für die etablierten Abwicklungsverfahren im Geldverkehr zwischen Kunden und Händlern, ihren Banken und ggf. den Betreibern von Kreditkartensystemen.

In erheblichem Maße müssen auch private Zahlungsvorgänge, die über einen kommerziellen Dienstanbieter abgewickelt werden, diesen etablierten Regeln folgen. An einer Abwicklung derartiger privater Zahlungsvorgänge mit modernsten technischen Mitteln - also insbesondere über das Internet bzw. die Telekommunikationsnetze - besteht speziell im Zusammenhang mit der weiteren Durchsetzung des elektronischen Geldverkehrs und im Zusammenhang mit dem nicht-gewerblichen Verkauf von Produkten oder Dienstleistungen (darunter Informationen) zwischen Privatleuten zunehmender Bedarf. Die bisher vorgeschlagenen und in Ansätzen auch in der Praxis verfügbaren Datenübertragungsverfahren, die diesem Zweck gewidmet sind, sind aufgrund unzureichender Zuverlässigkeit und Sicherheit und/oder unbequemer Handhabung zur Befriedigung eines entsprechenden Massenbedarfs noch nicht geeignet.

Der Erfindung liegt daher die Aufgabe zugrunde, ein Verfahren und eine Anordnung zur vereinfachten Abwicklung von privatem Zahlungsverkehr ("P2P = Person-to-Person) unter Nutzung eines Telekommunikationsnetzes anzugeben, welches den in verschiedenen Ländern bestehenden gesetzlichen Vorschriften und etablierten und bewährten Verfahrensabläufen des Geldverkehrs Rechnung trägt.

Diese Aufgabe wird hinsichtlich ihres Verfahrensaspektes durch ein Datenübertragungsverfahren mit den Merkmalen des Anspruchs 1, 2, 4 oder 5 und hinsichtlich ihres Vorrichtungsaspektes durch eine Datenübertragungsanordnung mit den Merkmalen des Anspruchs 19 oder 20 gelöst.

Die Erfindung schließt den wesentlichen Gedanken ein, ein weitgehend universelles System zur Abwicklung finanzieller Transaktionen auf der Grundlage eines herkömmlichen Bankkontos ("Postpaid") oder elektronischen Guthabens ("Prepaid") anzugeben, welches insbesondere für eine Zahlungsabwicklung im P2P-Bereich anwendbar ist, also die "Übersendung" von Geldbeträgen im privaten Bereich erlaubt.

Sie schließt weiter den Gedanken ein, hierzu primär ein TK-Netz zu nutzen, und zwar insbesondere die Möglichkeit einer weitgehenden Abwicklung in nahezu Echtzeit (Real Time). An das TK-Netz sind einerseits die TK-Endgeräte der das Netz nutzenden Teilnehmer und andererseits mindestens ein Transaktionsserver des Betreibers des TK-Netzes oder eines kundenorientiert arbeitenden Dienstanbieters angeschlossen.

Eine Person-to-Person-Zahlung im Sinne der vorliegenden Erfindung setzt das Vorliegen eines für eine elektronische Guthabentransferierung geeigneten Kontos "Wallet Account" sowohl auf Seiten des Zahlers als auch des Zahlungsempfängers voraus. Die Implementierung kann einerseits in einem Zwei-Schritt-Ablauf durch (1) Zahlung an einen "Händler" (P2P-Engine) und (2) Kreditierung auf ein Zahlungsempfängerkonto seitens des "Händlers" oder andererseits - nutzerfreundlicher - durch Integration der P2P-Engine bei einem Kontoverwaltungsserver des Zahlers implementiert werden. Für die P2P-Engine steht nachfolgend im wesentlichen der deutsche Terminus "Transaktionsserver", während der ebenfalls bereits erwähnte Kontoverwaltungsserver im Englischen auch als "Payment Instrument" (PI) bezeichnet werden kann. Der Verfahrensablauf der beiden Varianten wird in den Figuren genauer beschrieben.

Zur Auslösung des P2P-Zahlungsvorganges kontaktiert der Zahler mittels seines TK-Endgerätes über ein TK-Netz (insbesondere Mobilfunknetz) oder mittels seines Datenendgerätes über ein Datennetz (speziell das Internet) den Transaktionsserver bzw. die P2P-Engine und spezifiziert eine Adresse oder einen anderen Identifikator des Empfängers und den Zahlungsbetrag. Wahlweise können zusätzlich - im internationalen Zahlungsverkehr - die Zahlungswährung und eine Textnachricht (z.B. zum Zahlungszweck) eingegeben werden. Bei dem durch den Zahler angesprochenen Transaktionsserver oder einem mit diesem verbundenen weiteren Transaktionsserver wird aus einem aus der Zahler-Eingabe erstellten ersten Zahlungsanweisungs-Datensatz ein letztlich die Gutschrift beim Zahlungsempfänger bewirkender zweiter Zahlungsanweisungs-Datensatz gebildet. Hierbei erfolgt (sofern nicht bereits bei der Eingabe geschehen) die Spezifikation eines Kontenidentifikators des Zahlungsempfängers.

Werden die elektronisch geführten Konten von Zahler und Zahlungsempfänger auf verschiedenen Kontenverwaltungsservern geführt, schließt die Transformation zwischen erstem und zweitem Zahlungsanweisungs-Datensatz typischerweise die Ermittlung der Serveradresse des (zweiten) Kontenverwaltungsservers des Zahlungsempfängers und eine an diesen gerichtete Anfrage nach dem Kontenidentifikator des Zahlungsempfängers ein. Nach deren Beantwortung kann die Gutschrift des Zahlungsbetrages ausgeführt werden.

In den Zahlungsvorgang ist in jedem Falle eine Authentisierung des Zahlers unter Zugriff auf Teilnehmerdaten, die ihn als Teilnehmer eines TK-Netzes identifizieren, vorgesehen. Sofern der Zahlungsvorgang von seinem TK-Endgerät (Mobilfunk-Endgerät) ausgelöst wird, nutzt die Authentisierung dessen MSISDN zu einer ab-initio-Authentisierung. Wird der Zahlungsvorgang hingegen von einem Datenendgerät aus angestoßen, so ist ein Bestätigungsschritt unter Zugriff auf das TK-Netz, dessen Teilnehmer der Zahler ist, vorgesehen. Eine Bestätigungs-Anfrage ist im übrigen optional auch als zusätzlicher Schritt des erstgenannten Verfahrens vorgesehen.

Im internationalen Zahlungsverkehr hat der erste Zahlungsanweisungs-Datensatz einen ersten Währungscode und der zweite Zahlungsanweisungs-Datensatz einen zweiten, vom ersten verschiedenen Währungscode, und bei der Erstellung des zweiten Zahlungsanweisungs-Datensatzes wird eine Umrechnung aus der Betragsinformation des ersten Zahlungsanweisungs-Datensatzes in eine Betragsinformation des zweiten Zahlungsanweisungs-Datensatzes aufgrund eines vorgespeicherten Umtauschverhältnisses ausgeführt. Die hierfür benötigte Hard- und Softwareausstattung wird vom Systembetreiber bzw. Dienstanbieter bereitgestellt, und man kann sie sich in einem Umrechnungs-Server oder als zusätzliche Funktionalität eines der beteiligten Kontenverwaltungsserver realisiert denken. Das anzuwendende Umtauschverhältnis wird vom Transaktionsserver des Systembetreibers bereitgestellt, oder dieser führt auch - als Zusatzfunktionalität - die Umrechnung durch.

Die Datenübermittlungen werden von dem und zu dem Telekommunikations-Endgerät des Zahlers für eine Zahlung sämtlich per Kurznachricht gemäß SMS, Datenfile-Übertragung gemäß WAP oder über IVR-Sprachkommunikation ausgeführt. Hierbei ist die SMS-Variante - speziell ohne zusätzliche Bestätigung - eher für niedrige Beträge (darunter "Micropayments") sinnvoll. Bei der WAP-Variante ist die P2P-Engine in Art eines inzwischen bekannten "WAP-Shop" ausgeführt. Vorteilhaft dürfte jedenfalls eine Vermeidung von Wechseln im Zugriffsmedium während der Teilschritte des Auslösens der Zahlung, der Authentisierung und der Bestätigung des Guthabenübertrages sein.

Neben der bereits angesprochenen Authentisierung des Zahlers ist vorzugsweise bei höheren Geldbeträgen auch eine solche des Zahlungsempfängers anhand von im System (insbesondere beim Transaktionsserver oder zweiten Kontenverwaltungsserver) gespeicherten Nutzerdaten vorgesehen. Dies stellt eine wichtige Maßnahme gegen die Fehlleitung erheblicher Zahlungen dar. Im übrigen ist auch eine Verfahrensführung von Vorteil, bei der der Zahler über eine geeignete Ausführung des ersten Transaktionsservers - oder auch eine spezielle Schnittstelle zu seinem Kontenverwaltungsserver - einen Löschvorgang bezüglich der Zahlungs-Datenübertragung auslösen, die Zahlung also stornieren kann.

In einer weiteren Option ist eine Benachrichtung des Zahlungsempfängers über den vorgesehenen Guthaben-Übertrag vorgesehen, und in einer speziellen Fortbildung kann dieser weiterhin ein spezielles Zahlungsinstrument (einen Kontenverwaltungsserver) spezifizieren, zu dem die elektronische Zahlung gelenkt werden soll. Es sind also in diesem Sinne auch aktuelle Eingriffe in den Zahlungsvorgang seitens des Empfängers möglich.

Weiterhin ist zur Realisierung eines für den Systembetreiber bzw. Dienstanbieter wirtschaftlichen Betriebes die nachrichten- bzw. datenseitige Implementierung von Transaktionsgebühren (nachfolgend gefasst unter den Begriff "Abwicklungs-Betragsinformation) vorgesehen. Hierbei können die Transaktionskosten zu Lasten des Zahlers oder Zahlungsempfängers gehen oder zwischen beiden aufgespalten werden. Es wird zusammen mit der Abwicklungs-Betragsinformation dem zweiten Zahlungsanweisungs-Datensatz eine entsprechende Kennzeichnung darüber hinzugefügt wird, ob das Zahlerkonto oder Zahlungsempfängerkonto oder beide anteilig zu belasten sind.

Zur Sicherung einer wirtschaftlich tragfähigen Ausführung internationaler Zahlungsvorgänge zwischen Währungen, für die kein fixes Umrechnungsverhältnis besteht, ist ein sogenannter Spread im Datenübertragungsablauf zu implementieren. Hierzu wird bei der Umrechnung der Betragsinformation des ersten Zahlungsanweisungs-Datensatzes (in der ersten Währung) in diejenige des zweiten Zahlungsanweisungs-Datensatzes (in der zweiten Währung) eine entsprechende Spread-Information eingerechnet. Diese ist insbesondere in einer dem Transaktionsserver oder Systemverwaltungs-Server zugeordneten Datenbasis gespeichert.

Wesentliche Anordnungsaspekte des vorgeschlagenen Systems ergeben sich bereits aus den oben hervorgehobenen Verfahrensaspekten, so dass insoweit Wiederholungen entbehrlich sind. Es versteht sich nach obigem, dass Transaktionsserver eine wesentliche Komponente des vorgeschlagenen Systems darstellen und diese - je nach konkreter Systemausführung - mit TK-Endgeräten und wahlweise zusätzlich Datenendgeräten der Zahler sowie - direkt oder mittelbar über weitere Transaktionsserver - mit Kontenverwaltungsservern auf Zahler- und Zahlungsempfänger-Seite kommunizieren. Kernstück des Systems ist in bevorzugter Ausführung ein Systemverwaltungsserver, der mit mehreren Transaktionsservern im wesentlichen dauerhaft verbunden ist und im übrigen eine Funktionseinheit mit einem Transaktionsserver bilden kann. Der Systemverwaltungsserver ist einem TK-Netz oder auch mehreren TK-Netzen (insbesondere Mobilfunknetz(en)) zugeordnet. Diese Zuordnung gilt in bevorzugter Systemausführung auch für den (bzw. mindestens einen) Kontenverwaltungsserver.

Der Systemverwaltungsserver hat typischerweise einen Ablaufprogrammspeicher zur Speicherung mindestens eines Transaktions-Ablaufprogrammes der Datenkommunikation zwischen dem Telekommunikations-Endgerät eines Zahlers und dem Kontenverwaltungsserver bzw. dem Transaktionsserver oder den Transaktionsservern, und ihm ist zweckmäßigerweise ein dediziertes Datenhaltungssystem zur Speicherung und Verwaltung aller gültigen Nutzerdaten und, insbesondere von zahlungsverkehrsrelevanten Daten und Kennzeichnungen stattgefundener Datenübertragungsvorgänge zugeordnet.

Vorteile und Zweckmäßigkeiten der Erfindung ergeben sich im übrigen aus den Unteransprüchen sowie der nachfolgenden Beschreibung einer bevorzugten Systemausführung anhand der Figuren. Von diesen zeigen:

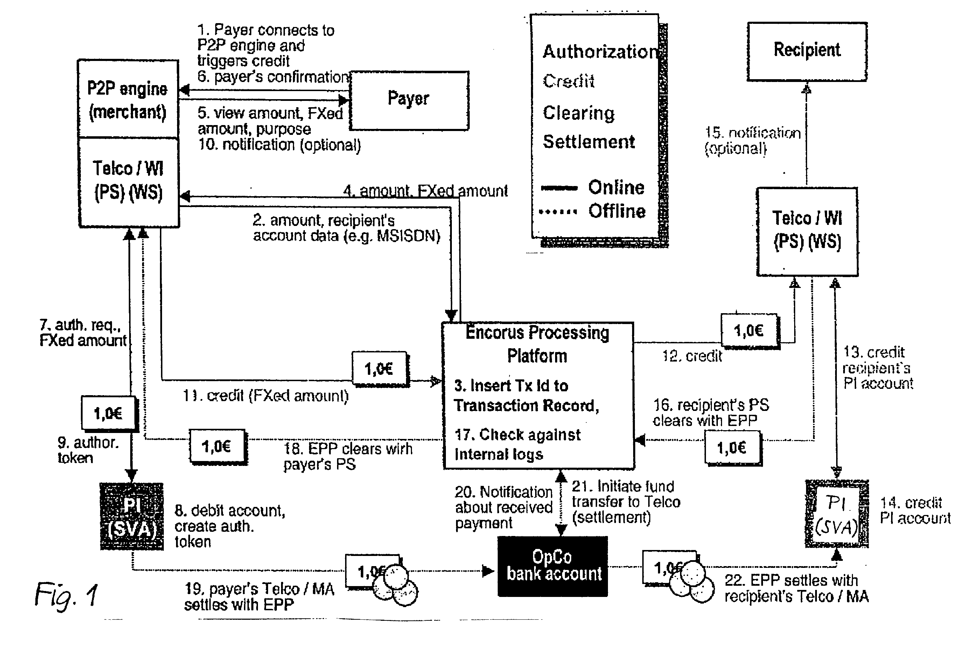

- Fig. 1: eine schematische synoptische Darstellung aus Systemstruktur und Verfahrensschritten bei einer ersten Verfahrensvariante,

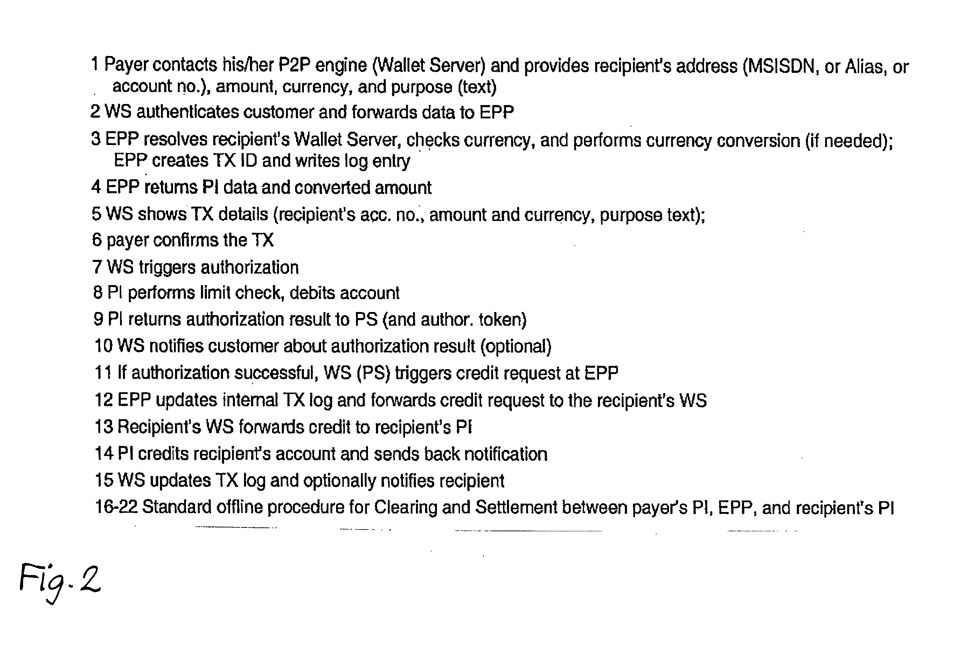

- Fig. 2: eine Liste der Verfahrensschritte bei dieser ersten Variante,

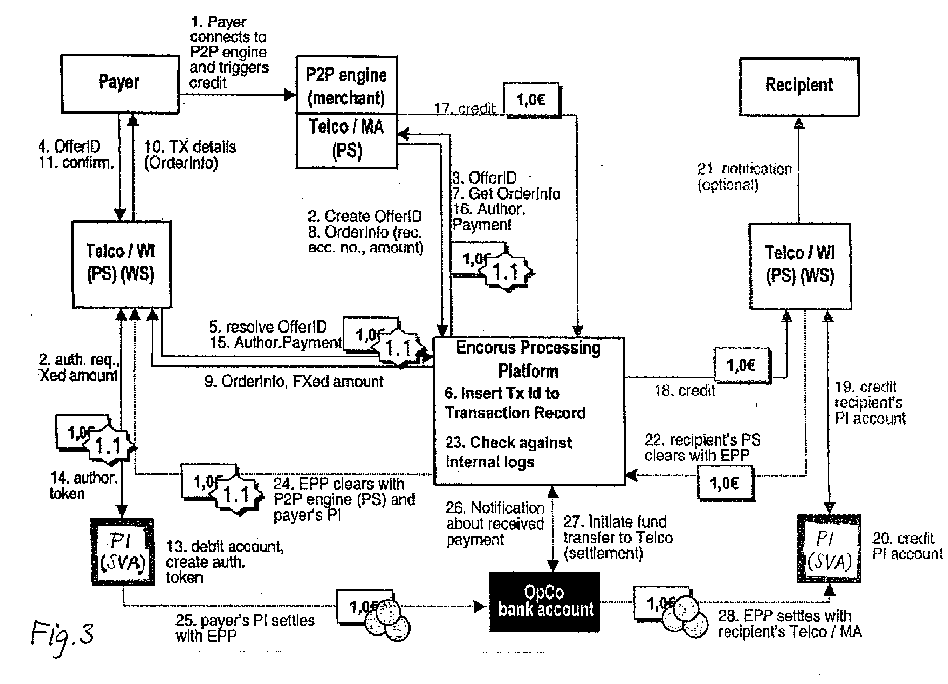

- Fig. 3: eine schematische synoptische Darstellung aus Systemstruktur und Verfahrensschritten bei einer zweiten Verfahrensvariante und

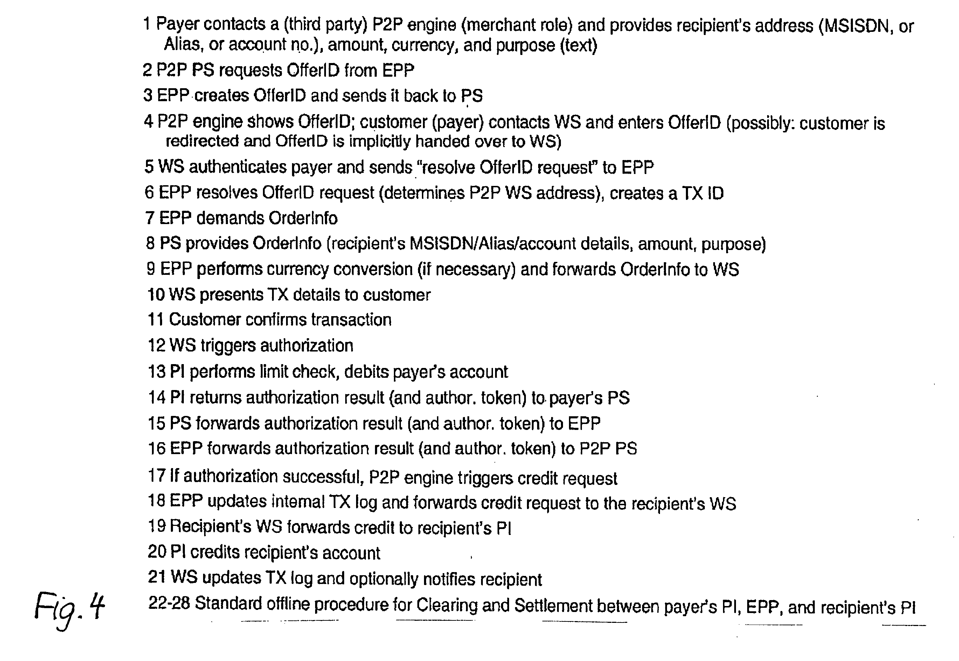

- Fig. 4: eine Liste der Verfahrensschritte bei dieser zweiten Variante.

Die Figuren sind durch ihre Beschriftung im wesentlichen selbsterklärend, so dass eine zusätzliche verbale Beschreibung nicht erforderlich ist.

Die Ausführung der Erfindung ist nicht auf die oben dargestellten Beispiele und hervorgehobenen Aspekte beschränkt, sondern ebenso in einer Vielzahl von Abwandlungen möglich, die im Rahmen fachgemäßen Handelns liegen.

### Bezugszeichenliste

- EPP: Encorus Processing Platform (Systemverwaltungsserver)
- FX: Foreign Exchange (Währungsumrechnung)
- MA: Merchant Acquirer (ein Dienstanbieter)
- OpCo: Systembetreiber
- PI: Payment Instrument
- PS: Payment Server (bei Transaktionsserver)
- P2P: Person-to-Person
- SVA: Stored value account (Guthabenkonto)
- Telco: Telekommunikationsbetreiber
- TX: Übertragung
- WI: Wallet Issuer (ein Dienstanbieter)
- WS: Wallet Server (ein Transaktionsserver)

## Patentansprüche

1. Datenübertragungsverfahren zur Übermittlung von zahlungsverkehrsrelevanten Informationen zur Ausführung einer Zahlung eines Zahlers an einen Zahlungsempfänger unter Zugriff auf ein durch einen ersten Kontenverwaltungsserver elektronisch verwaltetes Zahlerkonto unter Nutzung eines Telekommunikationsnetzes, insbesondere Mobilfunknetzes, an das der Zahler mit einem Telekommunikations-Endgerät angeschlossen ist,
wobei
- von dem Telekommunikations-Endgerät des Zahlers eine Verbindung mit einem ersten Transaktionsserver eines Systembetreibers oder Dienstanbieters aufgebaut und ein erster Zahlungsanweisungs-Datensatz, der mindestens eine Betragsinformation und eine Adressinformation des Zahlungsempfängers umfasst, an den ersten Transaktionsserver übermittelt wird,
- durch den ersten Transaktionsserver aus der Adressinformation ein Kontenidentifikator eines durch den ersten oder einen weiteren Kontenverwaltungsserver elektronisch verwalteten Zahlungsempfängerkontos ermittelt wird und
- durch den ersten Transaktionsserver eine Gutschrift auf das Zahlungsempfängerkonto durch Übermittlung eines zweiten Zahlungsanweisungs-Datensatzes, der mindestens die Betragsinformation und den Kontenidentifikator des Zahlungsempfängerkontos umfasst, an den Kontenverwaltungsserver des Zahlungsempfängerkontos ausgelöst wird.

2. Datenübertragungsverfahren zur Übermittlung von zahlungsverkehrsrelevanten Informationen zur Ausführung einer Zahlung eines Zahlers an einen Zahlungsempfänger unter Zugriff auf ein durch einen ersten Kontenverwaltungsserver elektronisch verwaltetes Zahlerkonto unter Nutzung eines Datennetzes, insbesondere des Internet, an das der Zahler mit einem Datenendgerät angeschlossen ist, sowie eines Telekommunikationsnetzes, insbesondere Mobilfunknetzes, an das der Zahler mit einem Telekommunikations-Endgerät angeschlossen ist,
wobei
- von dem Datenendgerät des Zahlers eine Verbindung mit einem ersten Transaktionsserver eines Systembetreibers oder Dienstanbieters aufgebaut und ein erster Zahlungsanweisungs-Datensatz, der mindestens eine Betragsinformation und eine Adressinformation des Zahlungsempfängers umfasst, an den ersten Transaktionsserver übermittelt wird,
- durch den ersten Transaktionsserver eine Verbindung zu dem Telekommunikations-Endgerät des Zahlers aufgebaut und ein Daten- oder Sprachkommunikationsvorgang zur Authentisierung des Zahlers über das Telekommunikationsnetz initiiert wird,
- im Ansprechen auf eine erfolgreiche Authentisierung durch den ersten Transaktionsserver aus der Adressinformation ein Kontenidentifikator eines durch den ersten oder einen weiteren Kontenverwaltungsserver elektronisch verwalteten Zahlungsempfängerkontos ermittelt wird und
- durch den ersten Transaktionsserver die Zahlung auf das Zahlungsempfängerkonto durch Übermittlung eines zweiten Zahlungsanweisungs-Datensatzes, der mindestens die Betragsinformation und den Kontenidentifikator des Zahlungsempfängerkontos umfasst, an den Kontenverwaltungsserver des Zahlungsempfängerkontos ausgelöst wird.

3. Datenübertragungsverfahren nach Anspruch 1 oder 2,
**dadurch gekennzeichnet, dass**
- durch den ersten Transaktionsserver aus der Adressinformation eine Serveradresse eines zweiten Kontenverwaltungsservers ermittelt wird, durch den das Zahlungsempfängerkonto elektronisch verwaltet wird,
- durch den ersten Transaktionsserver eine Anfrage nach einem Kontenidentifikator des Zahlungsempfängerkontos, unter Übermittlung der Adressinformation des Zahlungsempfängers, an den zweiten Kontenverwaltungsserver gesandt wird und
- durch den zweiten Kontenverwaltungsserver der Kontenidentifikator des Zahlungsempfängerkontos ermittelt und an den ersten Transaktionsserver gesandt wird.

4. Datenübertragungsverfahren zur Übermittlung von zahlungsverkehrsrelevanten Informationen zur Ausführung einer Zahlung eines Zahlers an einen Zahlungsempfänger unter Zugriff auf ein durch einen ersten Kontenverwaltungsserver elektronisch verwaltetes Zahlerkonto unter Nutzung eines Telekommunikationsnetzes, insbesondere Mobilfunknetzes, an das der Zahler mit einem Telekommunikations-Endgerät angeschlossen ist,
wobei
- von dem Telekommunikations-Endgerät des Zahlers eine Verbindung mit einem ersten Transaktionsserver eines Systembetreibers oder Dienstanbieters aufgebaut und ein erster Zahlungsanweisungs-Datensatz, der mindestens eine Betragsinformation und eine Adressinformation des Zahlungsempfängers umfasst, an den ersten Transaktionsserver übermittelt wird,
- der erste Zahlungsanweisungs-Datensatz durch den ersten Transaktionsserver an einen anhand eines Teiles der Adressinformation des Zahlungsempfängers festgestellten zweiten Transaktionsserver übermittelt wird,
- durch den zweiten Transaktionsserver aus der Adressinformation ein Kontenidentifikator eines durch den ersten oder einen weiteren Kontenverwaltungsserver elektronisch verwalteten Zahlungsempfängerkontos ermittelt wird und
- durch den zweiten Transaktionsserver eine Gutschrift auf das Zahlungsempfängerkonto durch Übermittlung eines zweiten Zahlungsanweisungs-Datensatzes, der mindestens die Betragsinformation und den Kontenidentifikator des Zahlungsempfängerkontos umfasst, an den Kontenverwaltungsserver des Zahlungsempfängerkontos ausgelöst wird.

5. Datenübertragungsverfahren zur Übermittlung von zahlungsverkehrsrelevanten Informationen zur Ausführung einer Zahlung eines Zahlers an einen Zahlungsempfänger unter Zugriff auf ein durch einen ersten Kontenverwaltungsserver elektronisch verwaltetes Zahlerkonto unter Nutzung eines Datennetzes, insbesondere des Internet, an das der Zahler mit einem Datenendgerät angeschlossen ist, sowie eines Telekommunikationsnetzes, insbesondere Mobilfunknetzes, an das der Zahler mit einem Telekommunikations-Endgerät angeschlossen ist,
wobei
- von dem Datenendgerät des Zahlers eine Verbindung mit dem ersten Transaktionsserver eines Systembetreibers oder Diensteanbieters aufgebaut und ein erster Zahlungsanweisungs-Datensatz, der mindestens eine Betragsinformation und eine Adressinformation des Zahlungsempfängers umfasst, an den ersten Transaktionsserver übermittelt wird,
- durch den ersten Transaktionsserver eine Verbindung zu dem Telekommunikations-Endgerät des Zahlers aufgebaut und ein Daten- oder Sprachkommunikationsvorgang zur Authentisierung des Zahlers über das Telekommunikationsnetz initiiert wird,
- im Ansprechen auf eine erfolgreiche Authentisierung durch den ersten Transaktionsserver der erste Zahlungsanweisungs-Datensatz durch den ersten Transaktionsserver an einen anhand eines Teiles der Adressinformation des Zahlungsempfängers festgestellten zweiten Transaktionsserver übermittelt wird,
- durch den zweiten Transaktionsserver aus der Adressinformation ein Kontenidentifikator eines durch den ersten oder einen weiteren Kontenverwaltungsserver elektronisch verwalteten Zahlungsempfängerkontos ermittelt wird und
- durch den zweiten Transaktionsserver eine Gutschrift auf das Zahlungsempfängerkonto durch Übermittlung eines zweiten Zahlungsanweisungs-Datensatzes, der mindestens die Betragsinformation und den Kontenidentifikator des Zahlungsempfängerkontos umfasst, an den Kontenverwaltungsserver des Zahlungsempfängerkontos ausgelöst wird.

6. Datenübertragungsverfahren nach Anspruch 4 oder 5,
**dadurch gekennzeichnet, dass**
- durch den zweiten Transaktionsserver aus der Adressinformation eine Serveradresse eines zweiten Kontenverwaltungsservers ermittelt wird, durch den das Zahlungsempfängerkonto elektronisch verwaltet wird,
- durch den zweiten Transaktionsserver eine Anfrage nach einem Kontenidentifikator des Zahlungsempfängerkontos, unter Übermittlung der Adressinformation des Zahlungsempfängers, an den zweiten Kontenverwaltungsserver gesandt wird und
- durch den zweiten Kontenverwaltungsserver der Kontenidentifikator des Zahlungsempfängerkontos ermittelt und an den zweiten Transaktionsserver gesandt wird.

7. Datenübertragungsverfahren nach einem der Ansprüche 1 bis 3,
**dadurch gekennzeichnet, dass**
durch den ersten oder zweiten Transaktionsserver der erste oder zweite Zahlungsanweisungs-Datensatz nach Ermittlung des Kontenidentifikators des Zahlungsempfängers vor Auslösung der Zahlung zusammen mit einer Bestätigungsaufforderung an das Telekommunikations-Endgerät des Zahlers übermittelt und die Zahlung erst im Ansprechen auf den Empfang eines Bestätigungssignals vom Telekommunikations-Endgerät des Zahlers ausgelöst wird.

8. Datenübertragungsverfahren nach einem der vorangehenden Ansprüche,
**dadurch gekennzeichnet, dass**
der erste Zahlungsanweisungs-Datensatz einen ersten Währungscode und der zweite Zahlungsanweisungs-Datensatz einen zweiten, vom ersten verschiedenen Währungscode umfasst und bei der Erstellung des zweiten Zahlungsanweisungs-Datensatzes eine Umrechnung aus der Betragsinformation des ersten Zahlungsanweisungs-Datensatzes in eine Betragsinformation des zweiten Zahlungsanweisungs-Datensatzes aufgrund eines vorgespeicherten Umtauschverhältnisses ausgeführt wird.

9. Datenübertragungsverfahren nach Anspruch 8,
**dadurch gekennzeichnet, dass**
die Umrechnung der Betragsinformation bei dem ersten oder zweiten Kontenverwaltungsserver unter Nutzung eines vom Transaktionsserver des Systembetreibers aus übermittelten Umtauschverhältnisses ausgeführt wird.

10. Datenübertragungsverfahren nach Anspruch 8,
**dadurch gekennzeichnet, dass**
die Umrechnung der Betragsinformation durch den Transaktionsserver aufgrund eines in einer zugeordneten Datenbasis gespeicherten Umtauschverhältnisses ausgeführt wird.

11. Datenübertragungsverfahren nach einem der vorangehenden Ansprüche,
**dadurch gekennzeichnet, dass**
der erste und/oder zweite Zahlungsanweisungs-Datensatz eine die Zahlung betreffende Textinformation umfasst, die insbesondere bei beiden Zahlungsanweisungs-Datensätzen im wesentlichen identisch ist.

12. Datenübertragungsverfahren nach einem der vorangehenden Ansprüche,
**dadurch gekennzeichnet, dass**
die Datenübermittlungen von dem und zu dem Telekommunikations-Endgerät des Zahlers für eine Zahlung sämtlich per Kurznachricht gemäß SMS, Datenfile-Übertragung gemäß WAP oder über IVR-Sprachkommunikation ausgeführt werden.

13. Datenübertragungsverfahren nach Anspruch 12,
**dadurch gekennzeichnet, dass**
eine Zahlung eines unterhalb eines vorbestimmten Schwellwertes liegenden Betrages durch die Übermittlung eines ersten Zahlungsanweisungs-Datensatzes per SMS ohne Rückbestätigung-Datenübertragung an das Telekommunikations-Endgerät initiiert wird.

14. Datenübertragungsverfahren nach einem der vorangehenden Ansprüche,
**dadurch gekennzeichnet, dass**
durch den ersten Kontenverwaltungsserver eine Autorisierungsprüfung des Zahlers und/oder durch den zweiten Kontenverwaltungsserver eine Autorisierungsprüfung des Zahlungsempfängers aufgrund von jeweils gespeicherten Nutzerdaten ausgeführt wird.

15. Datenübertragungsverfahren nach einem der vorangehenden Ansprüche,
**dadurch gekennzeichnet, dass**
durch den ersten oder zweiten Transaktionsserver eine Autorisierungsprüfung des Zahlers und/oder Zahlungsempfängers aufgrund von gespeicherten Nutzerdaten ausgeführt wird.

16. Datenübertragungsverfahren nach einem der vorangehenden Ansprüche,
**dadurch gekennzeichnet, dass**
die Adressinformation des Zahlungsempfängers im ersten Zahlungsanweisungs-Datensatz als MSISDN, Netzadresse eines IP-Netzes, Alias oder Kontoidentifikator ausgebildet ist.

17. Datenübertragungsverfahren nach einem der vorangehenden Ansprüche,
**dadurch gekennzeichnet, dass**
für jede Gutschrift durch den ersten oder zweiten Transaktionsserver eine Abwicklungs-Betragsinformation generiert und dem zweiten Zahlungsanweisungs-Datensatz zusammen mit einer vorbestimmten Kennzeichnung darüber hinzugefügt wird, ob das Zahlerkonto oder Zahlungsempfängerkonto oder beide anteilig hiermit zu belasten sind.

18. Datenübertragungsverfahren nach einem der Ansprüche 8 bis 17,
**dadurch gekennzeichnet, dass**
bei der Umrechnung der Betragsinformation des ersten Zahlungsanweisungs-Datensatzes in diejenige des zweiten Zahlungsanweisungs-Datensatzes eine, insbesondere in einer zugeordneten Datenbasis des Transaktionsservers oder Systemverwaltungs-Server gespeicherte, Spread-Information eingerechnet wird.

19. Datenübertragungsanordnung zur Übermittlung von zahlungsverkehrsrelevanten Informationen zur Ausführung einer Zahlung eines Zahlers an einen Zahlungsempfänger unter Zugriff auf ein elektronisch verwaltetes Zahlerkonto mit
mindestens einem Telekommunikationsnetz, insbesondere Mobilfunknetz, an das der Zahler mit einem Telekommunikations-Endgerät angeschlossen ist,
einem ersten Kontenverwaltungsserver zur Verwaltung des Zahlerkontos, der optional über das Telekommunikationsnetz mit dem Telekommunikations-Endgerät verbindbar ist,
einem ersten Transaktionsserver des Betreibers des Telekommunikationsnetzes oder eines Dienstanbieters, wobei der erste Transaktionsserver insbesondere über das Telekommunikationsnetz mit dem Telekommunikations-Endgerät verbindbar ist,
einem zweiten Kontenverwaltungsserver zur Verwaltung eines Zahlungsempfängerkontos, der direkt oder mittelbar mit dem ersten Transaktionsserver verbindbar ist und mit dem ersten Kontenverwaltungsserver identisch sein kann,
wobei der erste Transaktionsserver zur Umwandlung eines ersten Zahlungsanweisungs-Datensatzes, der mindestens eine Betragsinformation und eine Adressinformation des Zahlungsempfängers umfasst, in einen zweiten Zahlungsanweisungs-Datensatz, der mindestens die Betragsinformation und einen Kontenidentifikator des Zahlungsempfängerkontos umfasst, ausgebildet ist.

20. Datenübertragungsanordnung zur Übermittlung von zahlungsverkehrsrelevanten Informationen zur Ausführung einer Zahlung eines Zahlers an einen Zahlungsempfänger unter Zugriff auf ein elektronisch verwaltetes Zahlerkonto mit
mindestens einem Telekommunikationsnetz, insbesondere Mobilfunknetz, an das der Zahler mit einem Telekommunikations-Endgerät angeschlossen ist,
einem ersten Kontenverwaltungsserver zur Verwaltung des Zahlerkontos, der optional über das Telekommunikationsnetz mit dem Telekommunikations-Endgerät verbindbar ist,
einem ersten Transaktionsserver des Betreibers des Telekommunikationsnetzes oder eines Dienstanbieters, wobei der erste Transaktionsserver insbesondere über das Telekommunikationsnetz mit dem Telekommunikations-Endgerät verbindbar ist,
einem zweiten Kontenverwaltungsserver zur Verwaltung eines Zahlungsempfängerkontos, der mittelbar mit dem ersten Transaktionsserver verbindbar ist und mit dem ersten Kontenverwaltungsserver identisch sein kann,
einem zweiten Transaktionsserver, der mit dem ersten Transaktionsserver und dem zweiten Kontenverwaltungsserver verbindbar und zur Umwandlung eines ersten Zahlungsanweisungs-Datensatzes, der mindestens eine Betragsinformation und eine Adressinformation des Zahlungsempfängers umfasst, in einen zweiten Zahlungsanweisungs-Datensatz, der mindestens die Betragsinformation und einen Kontenidentifikator des Zahlungsempfängerkontos umfasst, ausgebildet ist.

21. Datenübertragungsanordnung nach Anspruch 19 oder 20,
**gekennzeichnet durch**
ein Datenendgerät, über das der Zahler mit einem Datennetz, insbesondere dem Internet angeschlossen ist und das mit dem ersten Transaktionsserver verbindbar ist.

22. Datenübertragungsanordnung nach einem der Ansprüche 19 bis 21,
**dadurch gekennzeichnet, dass**
ein Systemverwaltungsserver mit einer Mehrzahl von ersten und/oder zweiten Transaktionsservern in mehreren Telekommunikationsnetzen, insbesondere Mobilfunknetzen, im wesentlichen dauerhaft verbunden ist.

23. Datenübertragungsanordnung nach Anspruch 22,
**dadurch gekennzeichnet, dass**
der Systemverwaltungsserver in einem Telekommunikationsnetz, insbesondere Mobilfunknetz, angeordnet ist und eine Funktionseinheit mit einem Transaktionsserver bildet.

24. Datenübertragungsanordnung nach einem der Ansprüche 19 bis 23,
**dadurch gekennzeichnet, dass**
der oder mindestens ein Kontenverwaltungsserver dem oder einem Telekommunikationsnetz direkt zugeordnet ist und mit dem Systemverwaltungsserver und/oder mit dem Transaktionsserver zur Ausführung einer Zahlung, insbesondere unter Zugriff auf ein Prepaid-Guthaben, zusammenwirkt.

25. Datenübertragungsanordnung nach einem der Ansprüche 19 bis 23,
**dadurch gekennzeichnet, dass**
der oder mindestens ein Kontenverwaltungsserver außerhalb des netzinternen Steuerungsbereiches des oder jedes Telekommunikationsnetzes angeordnet und insbesondere direkt mit dem Telekommunikations-Endgerät des Zahlers verbindbar ist.

26. Datenübertragungsanordnung nach einem der vorangehenden Ansprüche 19 bis 25,
**dadurch gekennzeichnet, dass**
der Systemverwaltungsserver einen Ablaufprogrammspeicher zur Speicherung mindestens eines Transaktions-Ablaufprogrammes der Datenkommunikation zwischen dem Telekommunikations-Endgerät eines Zahlers und dem Kontenverwaltungsserver bzw. dem Transaktionsserver oder den Transaktionsservern aufweist.

27. Datenübertragungsanordnung nach einem der vorangehenden Ansprüche 19 bis 26,
**dadurch gekennzeichnet, dass**
dem Systemverwaltungsserver ein Datenhaltungssystem zur Speicherung und Verwaltung aller gültigen Nutzerdaten und, insbesondere von zahlungsverkehrsrelevanten Daten und Kennzeichnungen stattgefundener Datenübertragungsvorgänge zugeordnet ist.
